# EUROPEAN PATENT APPLICATION

(11) **EP 1 518 594 A1**
(43) Date of publication of application: **30.03.2005**
(21) Application number: 04077614.8
(22) Date of filing: 22.09.2004
(51) Int. Cl.: A63F 13/12

(54) **Program for generating ranking data**

(30) Priority: 24.09.2003 JP 2003331223; 03.09.2004 JP 2004256973
(71) Applicant: Sega Corporation, Ohta-ku, Tokyo 144-0043 (JP)
(72) Inventor: Shimizu, Yusuke, Sega Corporation, Tokyo 144-0043 (JP)
(74) Representative: SERJEANTS

(57) **Abstract**

A play data management server 22 collect via an internet 20 play data of various games, such as competition fighting games, etc. executed on a game device 12, and stores and manages the play data. The play data management server recognizes a player for special ranking, and prepares a special ranking data group for the player recognized as the special ranking and an ordinary ranking data group for players who has not been recognized as players for the special ranking. The ranking data generating program can keep the general players form being unmotivated to play games even when a player who obtains unnatural results.

## Description

### BACKGROUND OF THE INVENTION

The present invention relates to a ranking data generating program for generating ranking data, based on game play data of games played on game devices installed in game centers.

Competition fighting games in which a plurality of users compete with one another by using the so-called arcade game devices or others installed in game centers, etc. are proposed. Games which are played by internet-connected arcade game devices so that a plurality of users connect to severs through internets to compete therein are recently proposed.

In such on-line games, nation-wide players compete, and extra-services, such as the announcement of ranks of the players, etc. are provided to thereby make the games popular. Ranking categoriesarewinnumbers, lossnumbers, continuouswinnumbers, synthetic points, times of wins owing to functional bonuses, etc. The synthetic points are points which are given by synthetically judging skills of players, based on a plurality of factors.

The patent references which the inventor is aware of are as follows: Specification of Japanese Patent Application Unexamined Publication No. 2002-28373; Specification of Japanese Patent Application Unexamined Publication No. 2001-340639; and Specification of Japanese Patent Application Unexamined Publication No. 2002-360935.

However, there are players who are ranked top with unnaturally good results, e.g., continuous win numbers which are 10 or more times those of the second place players. Such good results will be given by players playing games many times or winning by making competitors non-resistive in cooperation with their friends. Such circumstances may non-motivate the general players to play games. Such good results are unnatural but not an illegal deed, such as falsifying game player data or others. It is not reasonable to prohibit the deed.

### SUMMARY OF THE INVENTION

An object of the present invention is to provide a ranking data generating method and a game system which, even when players who get unnatural results are present, can hinder the general players from being unmotivated to play games.

The ranking data generating program according to one aspect of the present invention is for commanding a computer to store personal information of a player and game result data of the player in a storage means and to execute processing for generating ranking data including the game result data ranked based on a plurality of the stored game result data, the ranking data including a first ranking data group and a second ranking data group, the processing for generating the ranking data comprising the steps of: computing a difference between the game result data of the player and a reference value stored in advance in the storage means; comparing the computed difference with a preset value stored in advance in the storage means; and based on a result of the comparison, registering the game result data of the player in either of the first ranking data group and the second ranking data group, and storing the ranking data in a ranking data storage means, in the step of storing the ranking data, when the computed difference is larger than the preset value, the game result data of the player being registered in the second ranking data group.

In the ranking data generating program described above, it is preferable that the processing for generating the ranking data further comprises the step of computing the reference value, based on said plurality of game result data stored in the storage means.

In the ranking data generating program described above, it is preferable that the ranking data includes the first ranking data group and the second ranking data group for each of a plurality of categories; and in the step of storing the ranking data, which of the first ranking data group and the second ranking data group the game result data of the player should be registered in is judged for each of the categories, and the ranking data is generated for each of the categories.

In the ranking data generating program described above, it is preferable that the process for generating the ranking data further includes the step of comparing a number of the categories in which the game result data of the player has been registered in the second ranking data group with a category-number-judging reference value stored in advance in the storage means, and in the step of storing the ranking data, when the number of the categories registered in the second ranking data group is larger than the category-number-judging reference value, the game result data of the player is registered in the second ranking data group in all the categories.

In the ranking data generating program described above, it is preferable that the processing for generating the ranking data further comprises the step of, when the game result data of the player has been registered in the second ranking data group, storing that the game result data of the player has been registered in the second ranking data in the storage means, associated with the personal information of the player.

In the ranking data generating program described above, it is preferable that the processing for generating the ranking data further comprises the step of judging whether or not the game result data of the player has been registered in the second ranking data group, and in the step of storing the ranking data, when the game result data of the player has been already registered in the second ranking data group, the game result data of the player is registered in the second ranking data group.

The game device according to one aspect of the present invention is for a game device in which a control means stores personal information of a player and game result data of the player in a storage means and performs processing generating ranking data having the game result data ranked based on a plurality of the stored game result data, the ranking data including a first ranking data group and a second ranking data group, the processing for generating the ranking data comprising the steps of: computing a difference between the game result data of the player and a reference value stored in advance in the storage means; comparing the computed difference with a preset value stored in advance in the storage means; and registering the game result data of the player in either of the first ranking data group and the second ranking data group, based on a result of the comparison and storing the ranking data in ranking data storage means, in the step of storing the ranking data, when the computed difference exceeds the preset value, the game result data of the player being registered in the second ranking data group.

The game system according to one aspect of the present invention is for a game system in which a plurality of game devices are communicatively connected to a server which stores personal information of a layer and game result data of the player in a storage means and performs processing for generating ranking data having the game result data ranked based on a plurality of the stored game result data, the ranking data including a first ranking data group and a second ranking data group, and the processing for generating the ranking data comprising the steps of: computing a difference between the game result data of the player and a reference value stored inadvanceinthestoragemeans; comparingthecomputeddifference with a preset value stored in advance in the storage means; and registering the game result data of the player in either of the first ranking data group and the second ranking data group, based on a result of the comparison and storing the ranking data in a ranking data storage means, in the step of storing the ranking data, when the computed difference exceeds the preset value, the game result data of the player being registered in the second ranking data group.

As described above, according to the present invention, a special player who has got an unnaturally good result is ranked in a special ranking, and the general players are ranked in an ordinary ranking, whereby even when players who get unnaturally good results, etc. are present, the general players are kept form being unmotivated to play games.

### BRIEF DESCRIPTION OF THE DRAWINGS

FIG. 1 is a diagrammatic view of the game system according to one embodiment of the present invention, which illustrates a constitution thereof.
FIG. 2 is a flow chart of the processing of the game system according to the embodiment of the present invention (Part 1).
FIG. 3 is a flow chart of the processing of the game system according to the embodiment of the present invention (Part 2) .
FIG. 4 FIG. 3 is a flow chart of the processing of the game system according to the embodiment of the present invention (Part 3).
FIG. 5 is a flow chart of the processing of the game system according to the embodiment of the present invention (Part 4).
FIG. 6 is a view of an image of the card register.
FIG. 7 is views of displays on a portable telephone.
FIG. 8 is a view of data in a member's card.
FIG. 9 is views of data in the server (Part 1).
FIG. 10 is views of data in the server (Part 2).

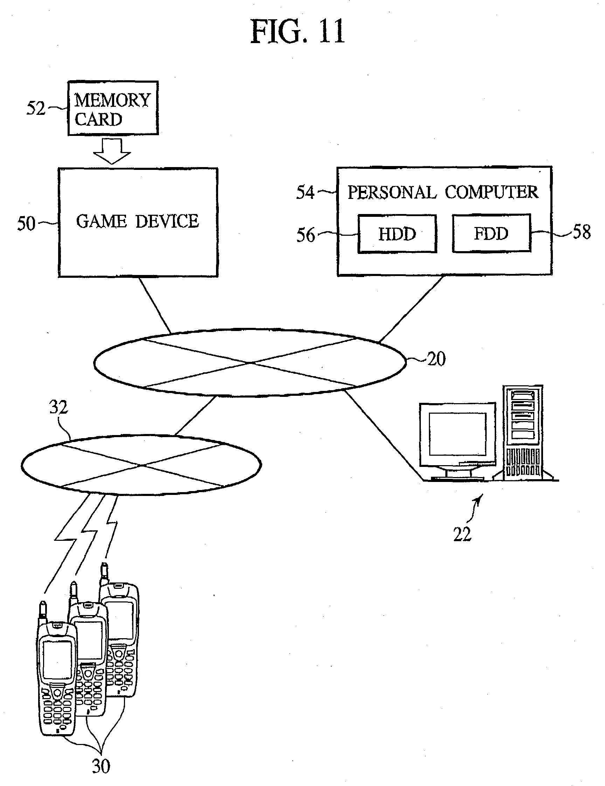

FIG. 11 is a view of the game system according to another embodiment of the present invention, which illustrates a constitution thereof.

### DETAILED DESCRIPTION OF THE INVENTION

### [An Embodiment]

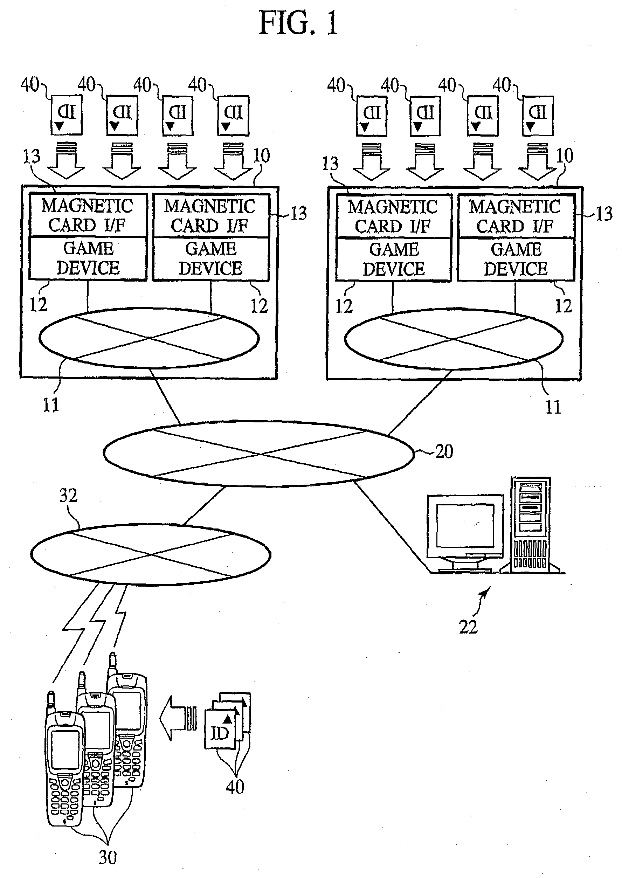

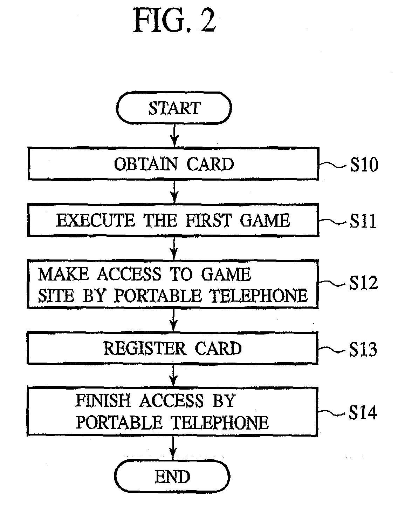

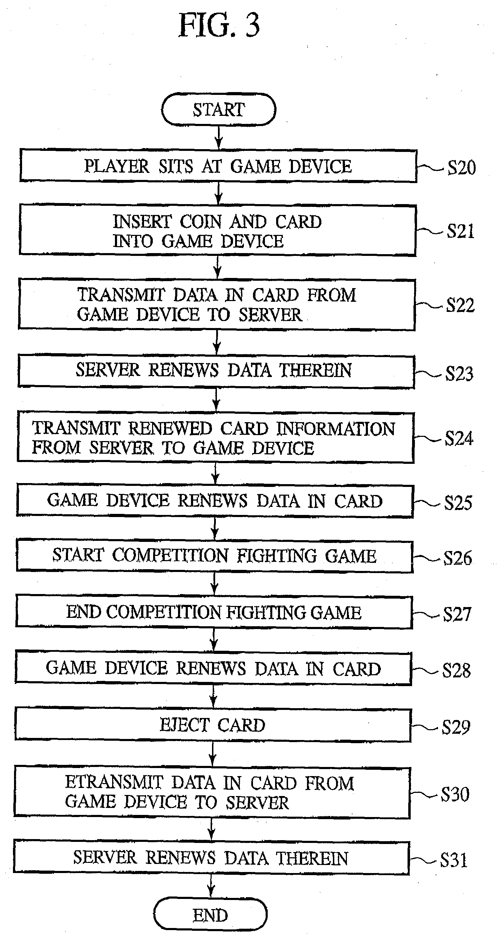

The game system according to an embodiment of the present invention will be explained with reference to the drawings. FIG. 1 is a diagrammatic view illustrating a structure of the game system according to the present embodiment. FIGs. 2 to 5 are flow charts of the processing of the game system according to the present embodiment. The game system according to the present embodiment will be explained as a competition fighting game but can be explained as other games.

### (Summary of the Game System)

First, the summary of the game system will be explained with reference to the drawing.

Game centers 10 are located in respective areas, e.g., nation-wide in Japan. Aplurality of game devices 12 for playing games are installed in each game center 10. The game devices 12 are, e.g., game machines for the commercial use, and games can be played on the game machines by inserting coins thereinto. Each game device 12 includes control means (not illustrated) for controlling a game, and a magnetic card I/F (interface) 13 for reading a member's card 40.

The member's card 40 links a competition fighting game on the game device 12 with the access to a gate site by a portable telephone 30. The member's card 40 bears a member's own ID number. The member's card 40 will be detailed later.

A LAN 11 in each game center 10 is connected to an internet 20 and can communicate with the gate devices 12 in the other game centers 10. Accordingly, a common competition fighting game can be played by a plurality of arbitrary game devices 12 which are installed in remote locations.

Players come to the game centers 10 and sit at the game devices 12, insert coins and operate on the operational panels to play a competition fighting gate with other players.

The internet 20 is connected to a play data management server 22. The play data management server 22 collects via the internet 20 play data of various games, e.g., competition fighting games, etc., executed by the game devices 12 and stores the play data in the memory means (not illustrated) to control them. The memory means temporarily or permanently stores and records as required, ranking data, personal information of players, game result data, preset reference values, etc. The memory means is a storage medium, such as a magnetic disc, semiconductor memory means (RAM) or others, which can read and write from and in computers. The play data management server 22hasarankingdatagenerationprogramforthecomputerinstalled in the play data management server 22 executing the processing for generating the ranking data. The play data management server 22 performs the processing for generating the ranking data.

Players use portable telephones (mobile communication terminals) 30 to connect to the internet 20 via portable telephone networks 32, and can make access to the game play data, etc. stored in the play data management server 22. Their national ranks, as of win numbers, loss numbers, continuous win numbers, synthetic points, etc. and others can be displayed ontheportabletelephones30. In place of the portable telephones 30, all information terminals including portable information terminals (mobile communication terminals), such as PHS, PDA, note PC, table PC, etc., communication terminals of PC, domestic game machines, etc. may be used.

### (Obtain a Card and Register the Card)

First, as illustrated in FIG. 2, a player buys a member's card 40 at a card vendor separately installed in a game center 10 or others and posses the member's card 40 (Step S10) . When the game devices 12 include the card vending function, the member's card 40 may be prepared and possessed by paying an additional fee at the start of a game.

The member's card 40 is a storage medium for storing information by magnetic means or electric means, as do magnetic cards, IC cards, etc.

Then, the player executes the first game (Step S11). The operation for executing the game will be detailed later. The first game is executed before the player registers the member's card 40 as his own card, because data of the member's card 40, which has not been used, is absent in the data base of the play data management server 22. When the first game is played with the member's card 40, which has not been used in the game, the data of the member's card 40 is stored in the data base of the play data management server 22.

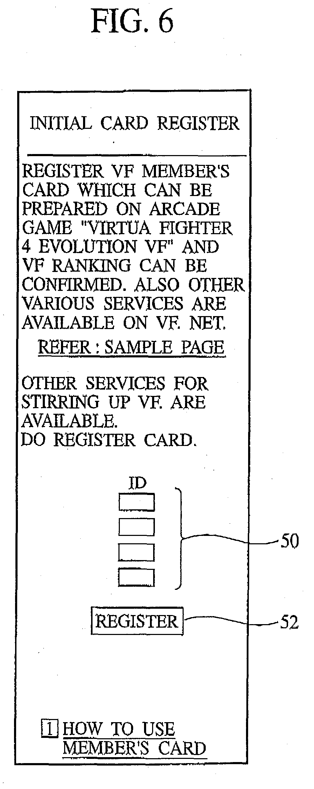

Next,theplayermakesaccesstothegamesiteof acompetition fighting game by the portable telephone 30 so as to register as his own card the member's card 40 he has bought (Step S12). When the access has been made to the game site, the image of the card register as illustrated in FIG. 6 is displayed on the portable telephone 30. FIG. 6 is a view of the image of the card register.

As illustrated in FIG. 6, in the card register image, the explanation of the member's card 40 is displayed at the upper part of the member's card 40, and an ID input box 50 and a register button 52 are displayed at the middle part of the member's card 40. The player inputs the ID number of the member's card 40 he has bought in the input box 50 and clicks the register button 52. Thus, the member's card 40 is registered as the card possessed by the owner of the portable telephone 30 (Step S13).

Then, the player finishes the access to the game site by the portable telephone 30 (Step S14).

The first game is executed here before the member's card 40 is registered as his won card. However, the first game is not essentially executed before the member's card 40 is registered as his won card, and in this case, the member's card 40 can be delivered after the initial register information is stored in the data base of the play data management server 22.

### (Execute the Game)

Then, the player sits at the game device 12 installed in the game center 10 (Step S20).

Subsequently, the player inserts coins into the game device 12 and inserts the member's card 40 into the game device 12 (Step S21).

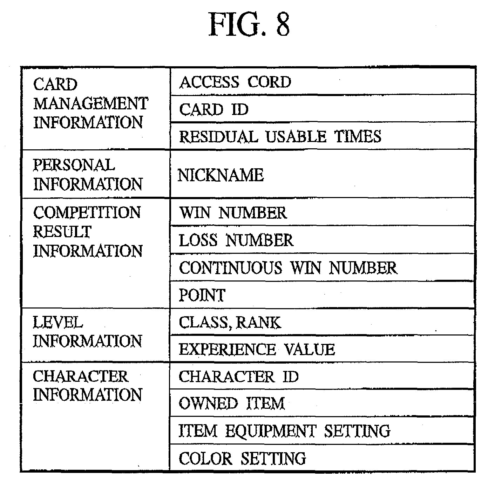

Then, the information stored in the member's card 40, i.e., the data in the card will be explained with reference to FIG. 8. FIG. 8 is a view illustrating the data in the card.

As illustrated in FIG. 8, the data in the card includes cardmanagement information, personal information, competition result information, level information, character information, etc. The card management information includes the access cord, the card ID, remaining times, etc. The personal information includes the nickname, etc. The competition result information includes the win number, loss number, continuous win number, point, etc. The level information includes the class/rank, experience value, etc. The character information includes the character IDs, the possessed items, the item device setting, color setting, etc.

The game device 12 reads the data-stored-in-the-card stored in the member's card 40. The game device 12 can recognize that the player who owns the member's card 40 will play the competition fighting game.

Then, the game device 12 transmits the read data-stored-in-the-card to the play data management server 22 (Step S22).

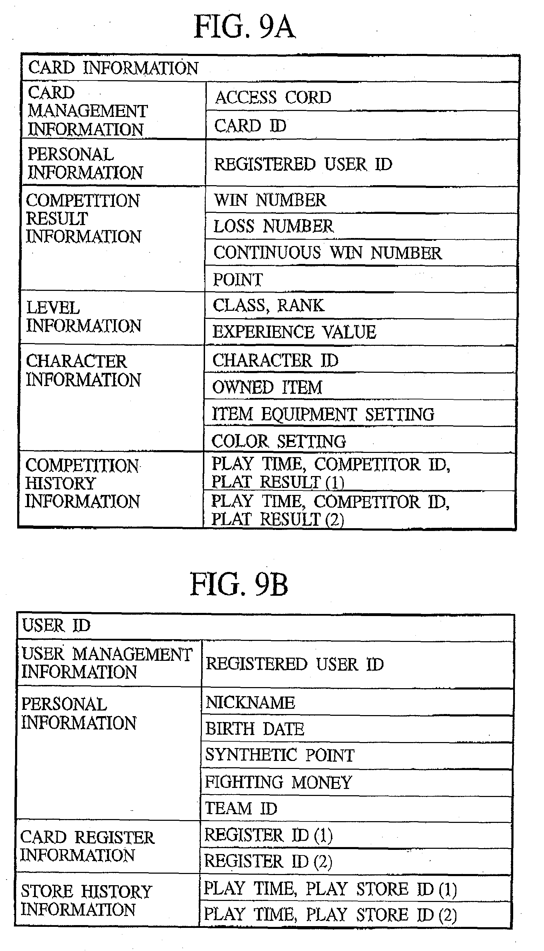

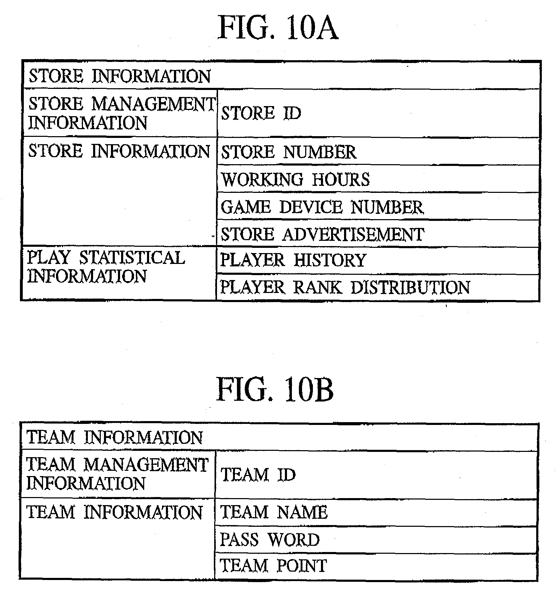

Here, the information stored in the play data management server 22, i.e., data-stored-in-the-server will be explained with reference to FIGs. 9 and 10. FIGs. 9 and 10 are views illustrating the data-stored-in-the-server.

The data-stored-in-the-server includes card information (see FIG. 9A), user information (see FIG. 9B) , store information (see FIG. 10A) and team information (see FIG. 10B). The data-stored-in-the-server is stored in the storage means provided in the play data management server 22. The storage means is a suitable storage medium which is readable and writable by computers, such as a magnetic disc, semiconductor storage means (RAM) or others. Storage means may be provided for respective kinds of data to be stored, or kinds of data to be stored may be stored in the storage means respectively at the divided storage regions.

First, thecardinformationwillbeexplainedwithreference to FIG. 9A. The card information is information of eachmember's card 40. The card information includes card management information, personal information, competition result information, level information, character information, competition history information, etc. The card management information includes an access cord, a card ID, etc. The personal information includes a registered user ID, etc. The competition result information includes a win number, a loss number, a continuous win number, a point, etc. The level information includes a class/rank, an experience value, etc. The character information includes character IDs, the possession items, item device setting, color setting, etc. The competition result information includes play times, competitor IDs, play results, etc. In FIG. 9A, the history for 2 competitions is stored, but every time when the player plays a game, the information is added to the competition history information. The recording limit for the competition history information is, e.g., 50 times. When the number of games exceeds 50 times, the competition history for the older games is deleted. The recording limit for the competition history information is 50 times here. However, the recording limit is not essentially 50 times and may be 100 times or 200 times. The recording limit for the competition history information may not be especially set.

Next, the user information will be explained with reference to FIG. 9B. The user information includes user management information, personal information, card register information and store history information. The user management information includes a registered user ID, etc. The personal information includes a nickname, a birth date, a synthetic point, fighting money, a team ID, etc. The card register information includes a registered card ID, etc. In FIG. 9B, a user registers 2 member's cards 40, but a user can own 15 member's cards 40 at most. Accordingly, the card register information includes 15 registered card IDs at most. In FIG. 9B, the user played games twice, but every time the user plays a game, the information is added to the store history information.

Then, the stored information will be explained with reference to FIG. 10A. The stored information includes store management information, store information and play statistic information. The store management information includes a store ID, etc. The store information includes a store name, working hours, a number of game machines, store advertisements, etc. The play statistic information includes a player history, a player rank distribution, etc.

Next, the team information will be explained with reference to FIG. 10B. The team information includes team management information and team information. The team management information includes a team ID, etc. The team information includes a team name, a pass word, a team point, etc.

When the data-stored-in-the-card is transmitted from the game device 12 to the play data management server 22, the play datamanagement server 22 renews the data-stored-in-the-server, based on the transmitted data-stored-in-the-card (Step S23).

Subsequently, the renewed data-stored-in-the-card is transmitted from the play data management server 22 to the gate machine 12 (Step S24).

Then, the game machine 12 renews the data-stored-in-the-card in the member's card 40, based on the card information transmitted from the play data management server 22 to the game machine 12 (Step S25).

Then, a competition fighting game is started by the game device 12 (Step S26). Game images (not illustrated) are displayed on the game machine 12. In the game images, fighting characters are displayed, and progresses of the game, etc. are displayed.

Thecompetitionfightinggamegoeson, and when one character defeats the other character, and the competition fighting game is ended (Step S27), a game image (not illustrated) showing the end of the competition fighting game is displayed on the game machine 12. When the competition fighting game is ended, the game machine 12 writes the competition result information, etc. in the member's card 40, and the data-stored-in-the-card of the member's card 40 is renewed (Step S28).

Then, the member's card 40 is ejected out of the game device 12 (Step S29).

### (Transmit the Card Information)

The data-stored-in-the-card, such as competition result information, etc. , stored in the member's card 40 is transmitted from the game device 12 to the play data management server 22 (Step S30).

The play data management server 22 renews the data-stored-in-the-server, based on the data-stored-in-the-card transmitted from the game device 12 to the play data management server 22 (Step S31). Specifically, out of the data-stored-in-the-server, the competition result information/competition history information included in the card information, the store history information, etc. included in the user information are renewed. The card information which has been renewed by the play data management server 22 is transmitted from the play data management server 22 to the game device 12 when the player plays the next game (Step S24) . Then, the game machine 12 renews the data-stored-in-the-card of the member' s card 40, based on the card information transmitted from the play data management server 22 to the game device 12 (Step S25).

In the above, when the game is ended, the member's card 40 is ejected from the gate game device 12 without renewing the data-stored-in-the-card of the member's card 40, based on the card information renewed by the play data management server 22. However, the member's card 40 may be ejected from the game device 12 after the data-stored-in-the-card of the member's card 40 has been renewed based on the card information renewed by the play data management server 22.

### (Countermeasures to Special Players)

When a special player who has got an unnaturally good result, etc. is contained in the rank, the general players may be unmotivated. Then, in the present embodiment, such special player is excluded from the ordinary ranking for the general players and is ranked in the special ranking.

Whether or not a player is a special player is judged based on a number of gray points (special points) given to the member's card and to the player. The gray point (special point) means here a point given when, highly possibly, a player is unnaturally playing.

The gray point is given as exemplified below.

First, the gray point to be given to a member's card will be explained.

The gray point to be given to a member's card includes a gray point (an absolute gray point) which absolutely increases every time the member's card unnaturally plays, and a gray point (a relative gray point) which relatively varies every time gray points are summed.

An absolute gray point to be given to a member's card is given in cases as exemplified below.

For example, most of the competitors with one member's card are a certain member's card 40, and besides, the wins are one-sided. More specifically, in the recent competition history of 50 games, the member's card has competed with only 5 member's cards and has won in all the games (or has lost in all the games).

Most of the competitions have been performed after the stores were closed. More specifically, in the stores which are to be closed at 11 p.m., the member's card has played after 11 p.m.

The wins and losses have been decided in too a short time. More specifically, the competitors with the member's card have not attacked or have retreated to ring out by themselves.

The relative gray points to be given to a member's card are given, e.g., when deviation values of the results of statistically treated synthetic points and win rates are extremely large or extremely small. More specifically, deviation values of the synthetic points, the win rates, etc. are larger by 10 points or more or are smaller by 10 points or more. The deviation values of the synthetic points, the win rates, etc. being extremely high or extremely low is judged based on the deviation values being higher or lower than preset values.

When a deviation value of the result of a statistically treated sum of the absolute gray points and the relative gray points is extremely large or extremely small, the play data management server 22 recognizes the member's card 40 as a gray card (special storage medium). Specifically, the play data management server 22 raises a gray flag for the data of the gray card. A deviation value of a sum of the absolute gray points and the relative gray points being extremely large or extremely small is judged based on the deviation value of the sum of the absolute gray points and the relative gray points being larger or smaller than a preset value.

Next, the gray points to be given to a player will be explained.

The gray points to be given every time a player can be gray points (absolute gray points) which absolutely increase everytimetheplayerunnaturallyplays,andgraypoints(relative gray points) which relatively vary every time the gray points are summed.

The absolute gray point given to a player can be a sum of gray points given to a plurality of member's card owned by the player.

The absolute point to be given to a player can be a number of gray cards owned by the player.

An absolute gray point is given to a player when the player competes mostly with the same player, e.g., when he competes mostlywithacertainplayer, andbesides, thewinsareone-sided. Specifically, in the recent 50 games, he has played with one and the same player, and has won in all the games (or has lost in all the games).

The gray point to be given to a player is given, e.g., when he is positioned high in both of the opposite ranks, such as the win number and the loss number, etc.

When a deviation value of the result of a statistically treated sum of the absolute gray points and the relative gray points is extremely large or extremely small, the play data management server 22 recognizes the player as a gray player (specialplayer). Specifically,theplaydatamanagementserver 22 raises a gray flag for the data of the player. A deviation value of a sum of the absolute gray points and the relative gray points being extremely large or extremely small is judged based on the deviation value of the sum of the absolute gray points and the relative gray points being larger or smaller than a preset value.

The gray player is not ranked based on the ordinary ranking but ranked based on the special ranking. The gray card is not ranked based on the ordinary ranking but ranked only based on the special ranking.

When a player is recognized as a gray player, it is possible that those of member's cards 40 owned by the gray player, except those which have been recognized as the gray cards are also recognized as the gray cards.

The methods for recognizing the member's cards and the players as objects to be specially ranked are not limited to the methods described above. The main methods for recognizing the member's cards and the players as objects to be specially ranked will be explained.

For example, a value of the game play data stored in a member's card 40 is compared to a preset reference value, and when a difference between the value of the game play data and the reference value is larger than a preset value, the member' s card 40 is recognized as a gray card. The member's card 40 may be specially ranked.

A value of the game play data stored in a member's card 40 is compared to a preset reference value, and when a difference between the value of the game play data and the reference value is larger than a preset value, a sum of the special points exceed a preset value, the member's card 40 is recognized as a gray card. The member's card 40 may be specially ranked.

A value of the game play data stored in a member's card 40 is compared to a preset reference value, and when a difference between the value of the game play data and the reference value is larger than a preset value, the member's card 40 is recognized as a gray card, and the player owning the member's card 40 is recognized as a gray player. The gray player may be specially ranked.

A value of the game play data stored in a member's card 40 is compared to a preset reference value, and when a difference between the value of the game play data and the reference value is larger than a preset value, a special point is given to the member's card 40, and when a sum of the special points exceed a preset value, the member's card 40 is recognized a gray card, andtheplayerowningthemember's card 40 is recognized as a gray player. The gray player may be specially ranked.

A value of the game play data stored in a member's card 40 is compared to a preset reference value, and when a difference between the value of the game play data and the reference value is larger than a preset value, a special point is given to the member's card 40, and when a sum of the special points exceed a preset value, a special point is give to the member's card 40, and when a sum of the special point given to the member's card 40 owned by the player exceeds a preset value, the player is recognized as a gray player. The gray player may be specially ranked.

When a deviation value of the game play data stored in a member's card 40 is larger or smaller than a preset value, the member's card 40 is recognized as a gray card, and the gray card may be specially ranked.

When a deviation value of the game play data stored in a member's card 40 is larger or smaller than a preset value, a gray point is given to the member's card 40, and when a sum of the gray points exceed a preset value, the member's card 40 is recognized as a gray card. The gray card may be specially ranked.

When a deviation value of the game play data stored in a member's card 40 is larger or smaller than a preset value, the member's card 40 is recognized a gray card, and the player owning the gray card is recognized as a special player. The special player may be specially ranked.

When a deviation value of the game play data stored in a member's card 40 is larger or smaller than a preset value, a gray point is given to the member's card 40, and when a sum of the gray points exceed a preset value, the member's card 40 is recognized a gray card, and the player owning the gray card is recognized as a gray player. The gray player may be specially ranked.

When a deviation value of the game play data stored in a member's card 40 is larger or smaller than a preset value, a special point is given to the member's card 40, and when a sum of the gray points given to all the member's cards 40 ownedbytheplayerexceedsapresetvalue,theplayerisrecognized a gray player. The gray player may be specially ranked.

The method for recognizing the member's cards and the players as object to be specially ranked are not limited these methods.

The reference values can be decided based on a plurality of game play data stored in the storage means of the play data management server 22. An average value of a plurality of game play data stored in the play data management server 22 can be the reference value. The reference value is stored in the storage means of the play data management server 22.

The preset reference values and the preset values are not essentially points, etc. The preset reference values and the preset values can be time. The preset values are stored in the storage means of the play data management server 22.

### (Ranking Categories)

Ranking categories are win numbers, loss numbers, continuous win numbers, game numbers, synthetic points, team points, etc.

Ranking categories for competition fighting games are exemplified here. However, the ranking categories are not limited to them. For example, the ranking categories may be performed based on, e.g., ranks, scores, total competition numbers, top times, maximum continuous win numbers, *yakuman* (special combination) win times, rare *yakuman* (special combination) win times, *agari* (win) rates, *furikomi* (allowing to win) rates, dora (bonus tile) average numbers, etc.

Ranks are decided by the following processing.

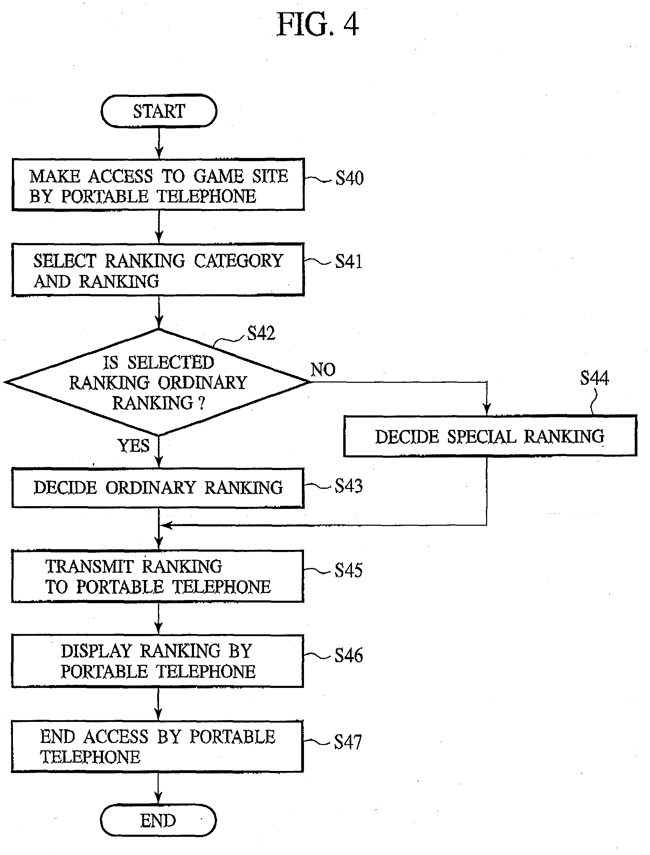

FIG. 4 is the flow chart of the method for deciding a rank.

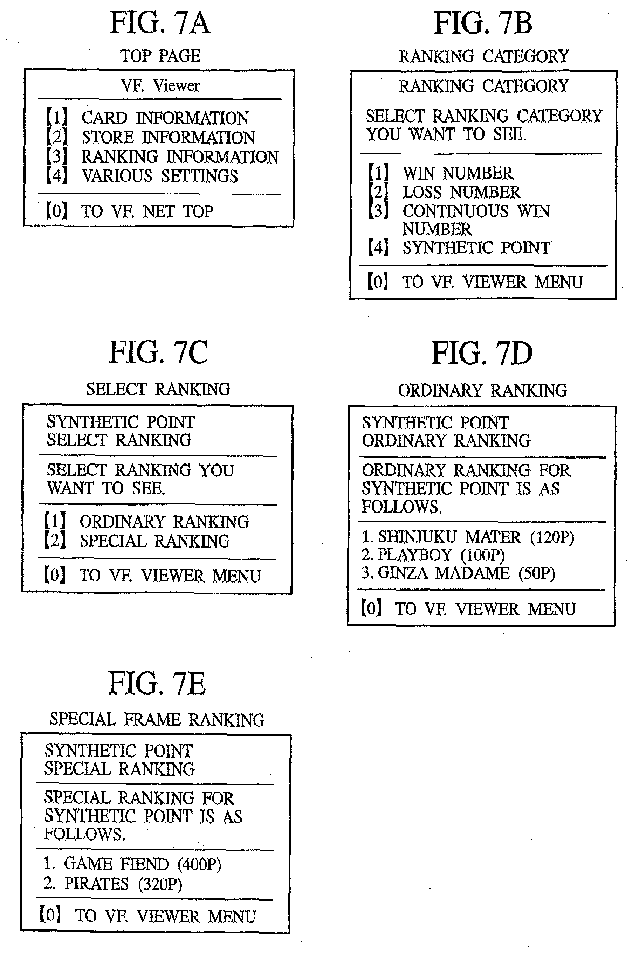

First, a user who desired to display ranks make access to a game site by a portable telephone 30 (Step S40). Then, a TOP page image as illustrated in FIG. 7A is displayed on the portable telephone 30. FIG. 7 is views of display views of the portable telephone. The user selects "Ranking Information".

Then, the ranking category selecting image as illustrated in FIG. 7B is displayed on the portable telephone 30. The user selects, e.g., "Synthetic Point" (Step S41).

Then, the ranking selecting image as illustrated in FIG. 7C is displayed on the portable telephone 40. The user selects, e.g., "Ordinary Ranking" (Step S41).

The play data management server 22 decides ranking as follows, based on the retrieval conditions for the ranking category and the ranking the user has selected.

First, it is judged whether or not the ranking selected by the user is the ordinary ranking (Step S42).

Next, when the ranking selected by the user is the ordinary ranking, the ordinary ranking is decided for the ordinary user except the gray user (Step S43). Specifically, the data of the synthetic point is sorted out of the data of the ordinary users without gray flags raised, and the data of the upper 10 cases, for example, are extracted. Then,basedontheextracted data, the ordinary ranking data (the first ranking data group) includingplaces, synthetic points, under IDs, etc. is prepared.

On the other hand, when the ranking selected by the user is the special ranking, the special ranking is decided for gray players alone (Step S44). Specifically, the data of the synthetic point is sorted out of the data of the gray players with gray flags raised, and the upper 10 cases, for example, are extracted. Then, based on the extracted data, the special ranking data (the second ranking data group) including places, synthetic points, user IDs, etc. is prepared.

Thus, the play data management server 22 decides the usual ranking or the special ranking. The data of the decided usual ranking or special ranking are stored in the ranking data storage means (not illustrated) of the play data management server 22. The ranking data storage means may be provided separate from the storage means of the play data management server 22. A part of the memory means may be used as the ranking data storage means.

The upper 10 cases were extracted here for ranking, but the upper 10 cases are not essential. The upper 100 cases, for example, may be extracted for ranking.

Subsequently, the play data management server 22 transmits the ranking data to the portable telephone 30 (Step S45).

Then, the portable telephone 30 displays the ranks (Step S46). When the ranking selected by the user is the ordinary ranking, the ordinary ranking as illustrated in FIG. 7D is displayed on the portable telephone 30. On other hand, the ranking selected by the user is the special ranking, the special ranking as illustrated in FIG. 7E is displayed on the portable telephone 30.

The ranking is decided in the unit of a player here. However, the ranking may be decided in the unit of a member's card 40.

Then, the access by the portable telephone 30 is finished (Step S47).

The ranking may be decided by the following processing.

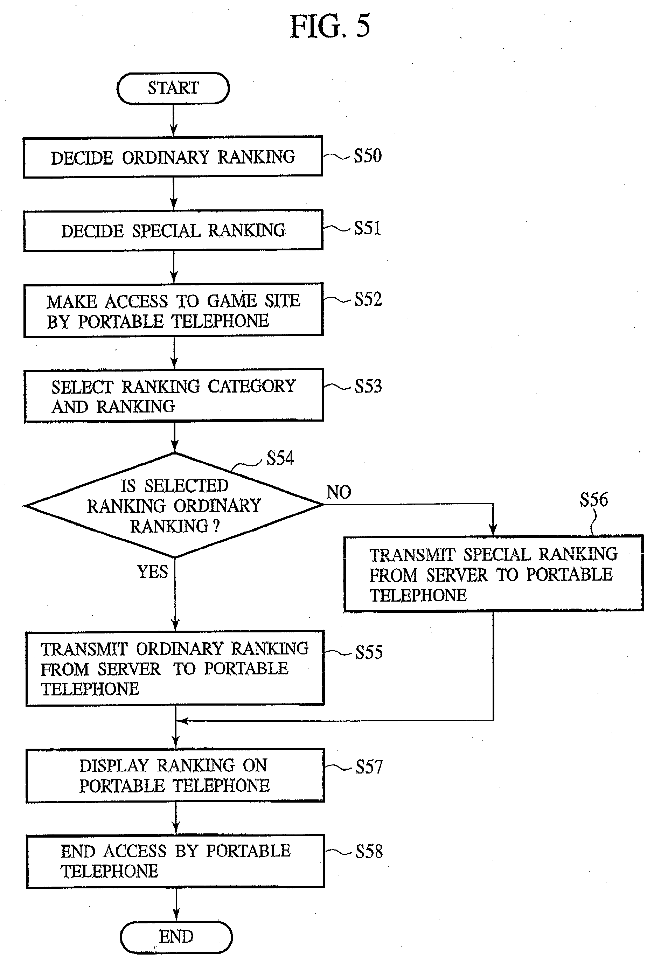

FIG. 5 is the flow chart of another method for deciding the ranking.

First, the ordinary ranking for the respective ranking categories is decided for an ordinary player except the gray player, and the ordinary ranking data is prepared (Step S50). Specifically, the ordinary ranking data is prepared by sorting data for the respective ranking categories out of the data of the ordinary player without a gray flag raised. The play data management server 22 stores the prepared ordinary ranking data in the ranking data storage means.

Next, the special ranking for the respective ranking categories is decided for a gray player, and the ordinary ranking data is prepared (Step S51). Specifically, the special ranking data is prepared by sorting data for the respective ranking categories out of the data of the special player with a gray flag raised. The play data management server 22 stores the prepared special ranking data in the ranking data storage means.

Thus, the special ranking and the ordinary ranking are decided in advance.

Then, the user makes access to the gate side by the portable telephone 30 (Step S52).

Subsequently, the user selects a ranking category and the rankings in the same way as described above (Step S53). As the ranking category, as described above, the synthetic point, for example, is selected.

The player data management server 22 judges whether or not the ranking selected by the user is the ordinary ranking (Step S54).

When the ranking selected by the user is the ordinary ranking,the playdatamanagementserver 22 transmits the ordinary ranking data of the synthetic point which has been already given to the portable telephone 30 (Step S55).

When the ranking selected by the user is the special ranking, the play data management server 22 transmits the special ranking data of the synthetic point which has been already given to the portable telephone 30 (Step S56).

Subsequently, the portable telephone 30 displays the ranking ( step S57). When the ranking selected by the user is the ordinary ranking, the ordinary ranking as illustrated in FIG. 7D is displayed on the portable telephone 30. When the ranking selected by the user is the special ranking, the special ranking as illustrated in FIG. 7E is displayed on the portable telephone 30.

The ranking is decided in the unit of a player here. However, the ranking may be decided in the unit of a member's card 40.

Then, the access to the portable telephone 30 is finished (Step S58).

As described above, according to another ranking deciding method described above, the ranking is decided in advance, whereby it takes very short time to display the ranking on the portable telephone 30.

Thus, the ranking is published.

In the above, the ordinary ranking data is prepared by sorting the ordinary data without a gray flag raised, and the special ranking data is prepared by sorting the data of a gray player. However, the ranking data may be prepared as follows.

That is, conditions for judging whether the game play data uploaded to the play data management server 22 is for the ordinary ranking (the first ranking) or for the special ranking (the second ranking) are set in advance in the play data management server 22. The game play data includes player information of a player who plays a game, and information of the result of a game player by the player (game result data).

Next, the play data management server 22 judges for each ranking category (each category) whether the game play data uploaded to the play data management server 22 is for the ordinary ranking or for the special ranking. The game play data uploaded to the play data management server 22 is stored in the play data management server 22 for the ordinary ranking or for the special ranking. Whether the game play data uploaded to the play data management server 22 is for the ordinary ranking or for the special ranking is judged based on a plurality of game player data stored in the play data management server 22.

Conditions pre-set in the play data management server 22 for judging whether the game player data is for the ordinary ranking or for the special ranking can be as exemplified below.

For example, a very large total of play times can be a condition for the special ranking. In this case, a total of play times is included in the game play data to be uploaded to the player data management server 22. When a player has a total of play times which is preset times or more that of the other players, the game play data of the player is stored for the special ranking in the play data management server 22. When a player has a total of play times which is preset times or more than an average total of play times of the other players, the game play data of the player may be stored for the special ranking.

In a game played by using a certain member's card 40, when result data in a certain ranking category is extremely better or extremely worse than an average value of the result data of the player owning the member's card 40 in the ranking category, it can be used as a conditions for the special ranking. The result data being extremely good or extremely bad can be judged based on the difference between the result data and the average value which being larger than a preset value.

The result data of a certain player in a certain ranking category being extremely better or extremely worse than an average value of the result data of the other players in the ranking category can a condition for the special ranking. The result data being extremely good or extremely bad can be judged based on the difference between the result data and the above-described average value being larger than a preset value.

The result data of a certain player in a certain ranking category being extremely better or extremely worse than a preset reference value pre-set by a manager may be used as a condition for the special ranking. The result data being extremely better or extremely worse can be judged based on the difference between the result data and the preset reference value being larger than the pre-set value.

Playing outside the working hours can be a condition for the special ranking. In this case, the game play data to be uploaded to the play data management server 22 includes data of a time when the game was played and the place where the game was played. More specifically, the game play data to be uploaded to the play data management server 22 includes data of a time and a place when and where the result data was recorded in the member's card 40, and others. Based on the store information of working hours, locations, etc. pre-stored in the play data management server 22, whether or not a game has been played in the working hours, and when it is judged that the game has been played outside the working hours, the game play data of the player is stored in the play data management server 22 for the special ranking.

It can be a condition for the special ranking that a win number, a game number, a synthetic point, etc. have been got by the cooperation with the competitors. A result given by cooperating with the competitor in, e. g. , a competition fighting game can be exemplified by a result given by making one side unresistive. Inmajon,thisisaresultobtainedbyintentionally making a previous player discard an atari hai (a piece required to win). Whether or not a result has been got by the cooperation with the competitor can be judged based on a play time per one competition, a competitor, a result of the competitor, etc. The synthetic point is the skill level of a game play, which is computed based on kinds of tricks, numbers of tricks, etc. used in the game.

Conditions for judging whether the game play data is for the ordinary ranking or the special ranking are not limited to the above and can be suitably set.

Thus, the game play data uploaded to the play data management server 22 are stored in the play data management server 22 for the ordinary ranking and the special ranking in the respective ranking category.

For a certain player, when a total number of the ranking categories which are for the special ranking exceed a preset number, the game play data of the player is stored in the play data management server 22 for the special ranking in all the ranking category. Specifically, when the game player data of a certain layer in a ranking category is judged to be for the special ranking, a special point (gray point) is given to the player information of the player and is stored in the play data management server 22. Then, when a total number of the special points for the player exceeds a preset number, the game play data of the player is judged to be stored in the play data management server 22 for the special ranking in all the ranking category. When it is judged that the game player data of the player should be for the special ranking in all the ranking categories, the judged information is stored in the server. The game player data of the player is stored in the play data management server 22 for the special ranking in all the ranking categories.

When it is judged that the game play data of the player should be for the special ranking in all the ranking categories, and the judged information is stored in the play data management server 22, the game play data read from all the member's cards 40 owned by the player can be for the special ranking in all the ranking category.

Thus, the game play data of the games played by players are sorted for either of the ordinary ranking and the special ranking.

Then, for the game play data for the ordinary ranking, ordinary ranks are decided for the respective ranking categories to prepare ordinary ranking data. Specifically, out of the game play data for the ordinary ranking, data for the respective ranking categories is sorted to prepare ordinary ranking data. The play data management server 22 stores the prepared ordinary ranking data in the ranking data storage means.

Next, for the game play data for the special ranking, special ranks are decided for the respective ranking categories to prepare special ranking data. Specifically, out of the game play data for the special ranking, data for the respective ranking categories is sorted to prepare special ranking data. The play data management server 22 stores the prepared special ranking data in the ranking data storage means.

Thus, the special ranks and the ordinary ranks may be decided.

As described above, according to the present embodiment, a special player who has got unnaturally good results, etc. are ranked based on the special ranking, and the general players are ranked based on the ordinary ranking, whereby even when a player who get unnaturally good results, etc., the general players are kept from being unmotivated to play games.

### [Modified Embodiments]

The present invention is not limited o the above-described embodiment and can cover other various modifications.

For example,inthe above-describedembodiment,the present invention is applied to competition fighting games but is applicable not only to competition fighting games, but also to any other game, such as Darts, Mah-jongg Game, Race Game, Game of Go, Japanese Chess, Chess, Othello, etc., in which score-ranking can be performed.

In the present embodiment, gray players are for the special ranking. However, the difficulty degree of a game may be set high for the gray players. In this case, based on the difficulty degree of a game, it is judged whether or not a player is a gray player, and when the player is judged to be a gray player, the difficulty degree of the game is ranked higher during the play by the player than the originally set difficulty degree, e.g., difficulty degree resetting processing for, e.g., increasing the performance of enemy characters is made. A warning may be made to gray players so that they do not play under unnatural conditions. The IDs may be deprived of gray players.

In the above-described embodiment, only one of the ordinary ranking and the special ranking is displayed on the portable telephone 30. Both the ordinary ranking and the special ranking may be displayed simultaneously on the portable telephone 30. In this case, the play data management server 22 prepares both the ordinary ranking and the special ranking.

In the above-described embodiment, ranks for each ranking category are displayed on the portable telephone 30. However, all the ranks may be displayed simultaneously on the portable telephone 30.

In the above-described embodiment, a gray card and a gray player are recognized automatically by the play data management server 22. However, a gray card and a gray player may be recognized based on human judgment.

In the above-described embodiment, the first raking data group (the ordinary ranking data) and the second ranking data group(thespecialrankingdata)areseparatelymanaged. However, the first ranking data group and the second ranking data group may not be separately controlled. For example, each play data may include information (i.e.. a flag or others) as to which of the first ranking data group and the second ranking data group the play data belongs to. The ranking data themselves may be managed as one data group. When the first ranking data group and the second ranking data groups are separately managed, the first ranking data group and the second ranking data group may be stored in discrete storage units, or one storage unit is divided in a plurality of regions to store the first ranking data and the second ranking data in the respective regions.

In the above-described embodiment, a game system including the so-calledarcade-type gamemachines installed in game centers communicatively connected via an internet is used. However, the principle of the present invention is applicable to the ranking in a game system including, in place of arcade-type game machines, domestic game devices 50 having means for communicatingwith a server through a network, personal computers 54, portable telephones 30, etc. In the domestic game devices 50, the personal information of the players and the game result data of the players are stored in the memory means, such as memory cards 52, etc. In the personal computers 54, the personal information of the players and the game result data of the players are stored in the storage means, such as the hard discs 56, flexible discs 58, etc. In the portable telephones 30, which have small storage capacities for storing the player history, the personal information of the players and the game result data of the players may be stored together with the play history in the storage means, etc. of the network server 22.

In the above-described embodiment, a network-type game system including game devices and a server communicatively interconnected is used. The principle of the present invention is not limited to the network-type game system and is applicable to stand alone-type game devices, e.g., single game devices in which the ranking is performed. In this case, a ranking data generating program is installed in the game device. The control units included in the game device makes processing for generating the ranking data. The ranking data are stored in the ranking data storage means included in the game device, etc. The ranking data storage means may be provided separate from the storage means provided in the game device. A part of the storage means may be used as the ranking data storage means.

The above-described stand alone-type game devices are not limited to arcade-type game devices and are applicable to game systems including domestic game devices 50, personal computers 54, etc. In the domestic game device 50, the personal information and the game result data of the player are stored in storage means, such as memory cards 52, etc. In the personal computers 54, the personal information of the players and the game result data of the players are stored in storage means, such as the hard discs 56, flexible discs 58, etc.

## Claims

1. A ranking data generating program for commanding a computer to store personal information of a player and game result data of the player in a storage means and to execute processing for generating ranking data including the game result data ranked based on a plurality of the stored game result data,
the ranking data including a first ranking data group and a second ranking data group,
the processing for generating the ranking data comprising the steps of:
computing a difference between the game result data of the player and a reference value stored in advance in the storage means;
comparing the computed difference with a preset value stored in advance in the storage means; and
based on a result of the comparison, registering the game result data of the player in either of the first ranking data group and the second ranking data group, and storing the ranking data in a ranking data storage means, such that when the computed difference is larger than the preset value, the game result data of the player is registered in the second ranking data group.

2. A ranking data generating program according to claim 1, wherein
the processing for generating the ranking data further comprises the step of computing the reference value, based on said plurality of game result data stored in the storage means.

3. A ranking data generating program according to claim 1 or 2, wherein
the ranking data includes the first ranking data group and the second ranking data group for each of a plurality of categories; and
in the step of storing the ranking data, which of the first ranking data group and the second ranking data group the game result data of the player should be registered in is judged for each of the categories, and the ranking data is generated for each of the categories.

4. A ranking data generating program according to claim 3, wherein
theprocessforgeneratingtherankingdatafurtherincludes the step of comparing a number of the categories in which the game result data of the player has been registered in the second ranking data group with a category-number-judging reference value stored in advance in the storage means, and
in the step of storing the ranking data, when the number of the categories registered in the second ranking data group is larger than the category-number-judging reference value, the game result data of the player is registered in the second ranking data group in all the categories.

5. A ranking data generating program according to any one of claims 1 to 4, wherein
the processing for generating the ranking data further comprises the step of, when the game result data of the player has been registered in the second ranking data group, storing that the game result data of the player has been registered in the second ranking data in the storage means, associated with the personal information of the player.

6. A ranking data generating program according to claim 5, wherein
the processing for generating the ranking data further comprises the step of judging whether or not the game result data of the player has been registered in the second ranking data group, and
in the step of storing the ranking data, when the game result data of the player has been already registered in the second ranking data group, the game result data of the player is registered in the second ranking data group.

7. A game device (12) in which a control means stores personal information of a player and game result data of the player in a storage means (22) and performs processing generating ranking data having the game result data ranked based on a plurality of the stored game result data,
the ranking data including a first ranking data group and a second ranking data group,
the processing for generating the ranking data comprising the steps of:
computing a difference between the game result data of the player and a reference value stored in advance in the storage means;
comparing the computed difference with a preset value stored in advance in the storage means; and
registering the game result data of the player in either of the first ranking data group and the second ranking data group, based on a result of the comparison and storing the ranking data in ranking data storage means, such that when the computed difference exceeds the preset value, the game result data of the player is registered in the second ranking data group.

8. A game system in which a plurality of game devices (12) are communicatively connected to a server (22) which stores personal information of a layer and game result data of the player in a storage means and performs processing for generating ranking data having the game result data ranked based on a plurality of the stored game result data,
the ranking data including a first ranking data group and a second ranking data group, and
the processing for generating the ranking data comprising the steps of:
computing a difference between the game result data of the player and a reference value stored in advance in the storage means;
comparing the computed difference with a preset value stored in advance in the storage means; and
registering the game result data of the player in either of the first ranking data group and the second ranking data group, based on a result of the comparison and storing the ranking data in a ranking data storage means, such that when the computed difference exceeds the preset value, the game result data of the player is registered in the second ranking data group.
